(19) Europäisches Patentamt
European Patent Office
Office européen des brevets

(11) **EP 2 528 375 A1**

(12) **EUROPEAN PATENT APPLICATION**

(43) Date of publication:
**28.11.2012 Bulletin 2012/48**

(51) Int Cl.:
*H04W 24/08* (2009.01)    *H04L 1/20* (2006.01)

(21) Application number: **12180208.6**

(22) Date of filing: **23.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.02.2008   CN 200810006246**
**24.07.2008   CN 200810135017**

(62) Document number(s) of the earlier application(s) in accordance with Art. 76 EPC:
**09709897.4 / 2 237 595**

(71) Applicant: **Huawei Technologies Co., Ltd.**
**Shenzhen, Guangdong 518129 (CN)**

(72) Inventors:
• **Fang, Ming**
  **Shenzhen (CN)**
• **Yin, Likun**
  **Shenzhen (CN)**

(74) Representative: **Kreuz, Georg Maria**
**Huawei Technologies**
**Dessauerstrasse 3**
**80992 Munich (DE)**

Remarks:
This application was filed on 13-08-2012 as a divisional application to the application mentioned under INID code 62.

(54) **Method and system for channel quality measurement**

(57)    A method and system for channel quality measurement are provided. The method includes the following steps. Bursts forming a Reduced Transmission Time Interval (RTTI) radio block are received. Channel quality measurement parameters of the RTTI radio block are computed according to channel quality measurement parameters of the bursts. Channel quality measurement parameters of a time slot pair corresponding to the RTTI radio block are computed according to the channel quality measurement parameters of the RTTI radio block.

FIG. 2

## Description

### FIELD OF THE TECHNOLOGY

The present invention relates to the field of communications, and more particularly to a method and system for channel quality measurement.

### BACKGROUND OF THE INVENTION

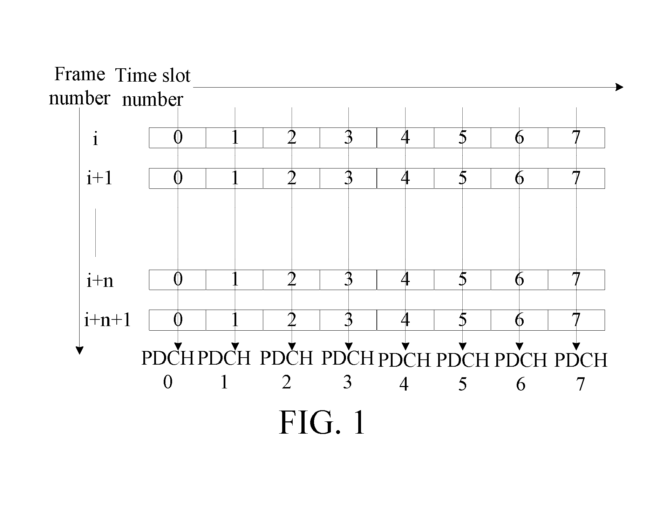

In systems, such as Global System for Mobile communications (GSM), General Packet Radio Service (GPRS), and Enhanced Data rates for GSM Evolution (EDGE), one Time Division Multiple Access (TDMA) frame is divided into 8 time slots, as shown in FIG. 1, and the same time slots of each of the frames form one Packet Data Channel (PDCH). The time slot assigned to the GPRS/Enhanced GPRS (EGPRS) is called the PDCH, and the network uses the PDCH as a unit when assigning channel resources.

EGPRS, being an enhanced version of a GPRS air interface, is also called the EDGE, which is a mobile network radio technology enabling an existing GSM network to have a capability of providing 3G services by using an existing frequency band, and improves a data rate of the system and implements a higher bit rate by adopting an 8-PSK modulation technology.

In the EGPRS system, under a packet transmission mode, the network notifies a terminal of whether channel quality measurement is performed and a measurement mode through a sent assignment message or reconfiguration message. After receiving the assignment message, the terminal performs the channel quality measurement according to the mode designated by the network, computes a Bit Error Probability (BEP) and an interference measurement value according to a measurement result, and then reports the BEP and the interference measurement value to the network through an EGPRS packet downlink Acknowledgement/Negative acknowledgement (Ack/Nack) message. The EGPRS packet downlink Ack/Nack message includes a channel quality report field, and the field includes the information, such as the BEP and the interference measurement value, computed by the terminal. The network correspondingly adjusts a code of a sent data block through the channel quality reported by the terminal, so as to optimize the transmission performance.

The assignment message or the reconfiguration message sent by the network includes a field indicating a link quality measurement mode, and the network may indicate the terminal to report the link measurement mode through the field, which includes the following cases:

(1) The terminal does not report a single time slot interference measurement $\gamma$ value, and does not report a single time slot BEP measurement BEP value.

(2) The terminal only reports the single time slot interference measurement $\gamma$ value.

(3) The terminal only reports the single time slot BEP measurement BEP value.

(4) The terminal reports the single time slot interference measurement $\gamma$ value, and reports the single time slot BEP measurement BEP value.

The EGPRS packet downlink Ack/Nack message includes a time slot link quality measurement field, and the terminal reports the single time slot interference measurement $\gamma$ value and/or the single time slot BEP measurement BEP value on the assigned time slot through the field. The interference measurement $\gamma$ value may be converted into an interference level I_LEVEL value through a certain corresponding relation, such that when the network requires the terminal to report the $\gamma$ value, the terminal reports the corresponding I_LEVEL value.

For example, the network requires the terminal to report the single time slot interference measurement $\gamma$ value and report the single time slot BEP measurement BEP value. If the time slot assigned to the terminal is a time slot 0 (TNO), the terminal reports a Mean Bit Error Probability (MEAN_BEP) value and the I_LEVEL value under a certain modulation mode on TNO. If a plurality of time slots is assigned to the terminal, the terminal reports the MEAN_BEP value and the I_LEVEL value under a certain modulation mode on each assigned time slot.

For example, the measurement value on TNO is reported in the following manner:
{0|1 {0 <GMSK_MEAN_BEP_TN0 : bit (4) > a MEAN_BEP value under a GMSK modulation mode on TNO
| 1 < 8PSK_MEAN_BEP_TN0 : bit (4) >}} or a MEAN_BEP value under an 8PSK modulation mode on TNO
and
{0 | 1 < I_LEVEL_TN0 : bit (4) > } the I_LEVEL value on TNO

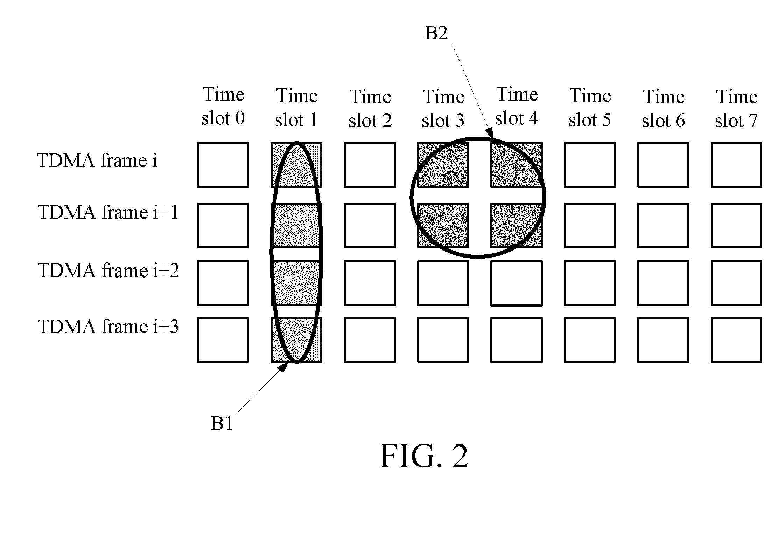

During the evolution of GSM/EDGE Radio Access Network (GERAN), a transmission time delay is reduced by adopting a fast Ack/Nack message based on time, that is to say, the Ack/Nack information is quickly fed back by carrying a short bitmap in a downlink Radio Link Control/Medium Access Control (RLC/MAC) data block. After being packaged in the RLC/MAC data block, the high-level data is borne and transmitted by a radio block. The radio block is a basic unit of radio resource assignment and radio transmission. Each Basic Transmission Time Interval (BTTI) radio block is formed by 4 bursts, and is respectively located on the same time slot of 4 continuous TDMA frames. The BTTI radio block is as shown by B1 in FIG. 2, the BTTI radio block B1 is on 4 continuous TDMA frames, each frame occupies one time slot, and a Transmission Time Interval (TTI) of B1 is equal to 20 ms. In order to reduce the transmission time delay of the high-level data, a Reduced TTI (RTTI) technology is proposed. An overall concept of the RTTI is to remain a size of each radio block unchanged, and to reduce the TTI by using a plurality of time slots. The RTTI radio block is as shown by B2 in FIG. 2, the RTTI radio block B2 is on 2 continuous TDMA frames, each frame occupies 2 time slots, and a TTI of B2 is equal to 10 ms.

However, it has become apparent that in the prior art, the terminal performs the channel quality measurement, relevant computation, and reporting on the basis of one time slot and the BTTI radio block, and performs filtering at intervals of 20 ms. The solution cannot support the channel quality measurement, relevant computation, and reporting under the RTTI radio block configuration.

## SUMMARY OF THE INVENTION

Aspects of the present invention are directed to a channel quality measuring method, terminal, and system, such that the terminal may support channel quality measurement under a BTTI configuration and an RTTI configuration at the same time.

According to a first aspect, the present invention provides a channel quality measuring method, which includes the following steps.

Bursts forming an RTTI radio block are received.

Channel quality measurement parameters of the RTTI radio block are computed according to channel quality measurement parameters of the bursts, and channel quality measurement parameters of a time slot pair corresponding to the RTTI radio block are computed according to the channel quality measurement parameters of the RTTI radio block.

According to a second aspect, the present invention provides a method for reporting channel quality measurement parameters, which includes the following step.

RTTI channel quality measurement parameters are reported through a single time slot measurement value report field corresponding to any time slot in a time slot pair of an RTTI radio block.

Alternatively, RTTI channel quality measurement parameters are reported through an added time slot pair measurement value report field.

According to a third aspect, the present invention provides a terminal, which includes a burst receiving unit, a first computing unit, and a second computing unit.

The burst receiving unit is configured to receive bursts forming an RTTI radio block.

The first computing unit is configured to compute channel quality measurement parameters of the RTTI radio block according to channel quality measurement parameters of the bursts.

The second computing unit is configured to compute channel quality measurement parameters of a time slot pair corresponding to the RTTI radio block according to the channel quality measurement parameters of the RTTI radio block.

According to a fourth aspect, the present invention provides a channel quality measuring system, which includes a network side and a terminal.

The network side is configured to deliver a measurement mode indication, where the measurement mode indication is configured to indicate channel quality measurement parameters of a time slot pair reported under an RTTI configuration.

The terminal is configured to perform measurement under the RTTI configuration according to the measurement mode indication.

It may be known from the technical solutions of the present invention that, in the present invention, by receiving the bursts forming the RTTI radio block, time slot pair measurement values of the RTTI are computed on the basis of the RTTI radio block of two time slots; and overall quality measurement parameters on all assigned channels are computed according to the time slot pair measurement values, such that the terminal may support channel quality measurement and reporting under the BTTI configuration and the RTTI configuration at the same time, thereby implementing the channel quality measurement and reporting under the different configurations.

## BRIEF DESCRIPTION OF THE DRAWINGS

FIG. 1 is a schematic structural view of TDMA frames in the prior art;

FIG. 2 is a schematic view of radio blocks in the TDMA frames in the prior art;

FIG. 3 is a flow chart of a channel quality measuring method according to an embodiment of the present invention; and

FIG. 4 is a schematic structural view of a terminal according to an embodiment of the present invention.

## DETAILED DESCRIPTION OF THE EMBODIMENTS

To help those skilled in the art better understand the technical solution, the present invention is further described in detail with reference to accompanying drawings and embodiments.

In the present invention, in terms of features of an RTTI radio block being different from a BTTI radio block, that is, four bursts of the RTTI radio block are distributed on two time slots (hereinafter referred to as a time slot pair), the RTTI radio block is measured on the basis of one time slot pair, and the channel quality is computed according to a measurement result, thereby implementing channel quality measurement under an RTTI configuration.

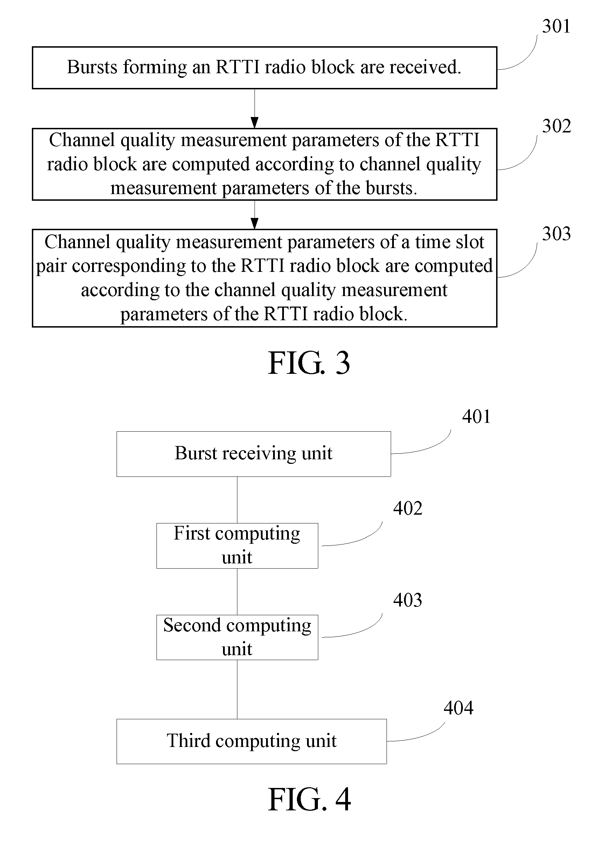

FIG. 3 is a flow chart of a channel quality measuring method according to an embodiment of the present invention, which mainly includes the following steps.

In Step 301, bursts forming an RTTI radio block are received.

In Step 302, channel quality measurement parameters of the RTTI radio block are computed according to channel quality measurement parameters of the bursts.

In Step 303, channel quality measurement parameters of a time slot pair corresponding to the RTTI radio block are computed according to the channel quality measurement parameters of the RTTI radio block.

In order to implement the channel quality measurement under various configurations (BTTI configuration and RTTI configuration), a network side indicates a channel quality measurement mode to a terminal, and the terminal performs the corresponding measurement according to the mode indicated by the network side.

When the channel quality measurement under the RTTI configuration is performed, the four bursts forming the RTTI radio block are received, the measurement is performed on the basis of the RTTI radio block of the two time slots, time slot pair measurement values of the RTTI are computed, and the channel quality measurement parameters are computed according to the time slot pair measurement values. Specifically, a plurality of manners may be adopted.

1. A forgetting factor being the same as that of the BTTI configuration in the prior art, that is, a forgetting factor intended for 20 ms filtering, is adopted.

2. A forgetting factor intended for 10 ms filtering, that is, a forgetting factor being different from that of the BTTI configuration, is adopted, and the forgetting factor under the RTTI configuration may be a function of the forgetting factor under the BTTI configuration, for example, a linear function multiplied by a coefficient, such as, 0.5 or 0.3; or a non-linear function, such as, a value of e is a function $e = 1 - \sqrt{1 - e'}$ of the forgetting factor (e') under the BTTI configuration in the prior art.

In the following, the two methods are described in detail.

In a first embodiment, a measurement of 20 ms filtering on the basis of one time slot pair is performed.

In this embodiment, a forgetting factor adopted during channel quality measurement is applicable to 20 ms filtering. Each RTTI radio block channel quality measurement value (referred to as radio block measurement value for short) intended for the terminal and being in a designated modulation type is computed, the RTTI radio block measurement values may include a MEAN_BEP of the RTTI radio block and a BEP variance of the RTTI radio block, and the RTTI radio block measurement values are computed according to measurement values of the four bursts forming the radio block and distributed on the two time slots. RTTI time slot pair channel quality measurement values are computed according to the RTTI radio block measurement values, and the RTTI time slot pair channel quality measurement values may include a MEAN_BEP of the time slot pair and a BEP variance of the time slot pair. Then, overall channel quality measurement parameters on all the assigned channels, for example, an overall channel MEAN_BEP and an overall channel BEP variance on all the assigned channels, are computed according to the time slot pair measurement values.

Firstly, the MEAN_BEP of the RTTI radio block, and the BEP variance of the RTTI radio block are computed.

The terminal receives the RTTI radio block on the two time slots (that is, one time slot pair) forming an RTTI PDCH pair, and determines whether the RTTI radio block is intended for the terminal and is in the designated modulation mode. If yes, a mean value of computation values of the four bursts forming the RTTI radio block serves as a computation value of the RTTI radio block. A formula is shown in the following.

The MEAN_BEP of the RTTI radio block is:

$$MEAN\_BEP_{block} = \frac{1}{4}\sum_{i=1}^{4} BEP_{burst\ i}$$

(Formula 1)

That is, the MEAN_BEP of the RTTI radio block $MEAN\_BEP_{block}$ is the mean value of BEPs $BEP_{burst\ i}$ of the four bursts forming the RTTI radio block.

The BEP variance of the RTTI radio block is:

$$CV\_BEP_{block} = \frac{\sqrt{\frac{1}{3}\sum_{k=1}^{4}\left(BEP_{burst\ k} - \frac{1}{4}\sum_{i=1}^{4} BEP_{burst\ i}\right)^2}}{\frac{1}{4}\sum_{i=1}^{4} BEP_{burst\ i}}$$

(Formula 2)

It should be noted that, in 20 ms, whether the RTTI radio blocks of the first 10 ms and the last 10 ms are intended for the terminal and are in the designated modulation mode may have the following cases:

(1) Only the RTTI radio block of the first 10 ms is intended for the terminal and is in the designated modulation mode.

(2) Only the RTTI radio block of the last 10 ms is intended for the terminal and is in the designated modulation mode.

(3) Both of the RTTI radio blocks of the first 10 ms and the last 10 ms are intended for the terminal and are in the designated modulation mode.

(4) Neither of the RTTI radio blocks of the first 10 ms and the last 10 ms is intended for the terminal nor is in the designated modulation mode.

However, no matter for which case, both Formula (1) and Formula (2) are satisfied. For ease of description, a represents the RTTI radio block of the first 10 ms, and b represents the RTTI radio block of the last 10 ms, so no matter whether the RTTI radio block of a and/or b is intended for the terminal and is in the designated modulation mode, Formula (1) and Formula (2) are satisfied, and derivatives of Formula (1) and Formula (2) are acquired as follows:

$$MEAN\_BEP_{blcok,a} = \frac{1}{4}\sum_{i=1}^{4} BEP_{burst\ i}$$

(Formula 3)

$$CV\_BEP_{block,a} = \frac{\sqrt{\frac{1}{3}\sum_{k=1}^{4}\left(BEP_{burst\ k} - \frac{1}{4}\sum_{i=1}^{4} BEP_{burst\ i}\right)^2}}{\frac{1}{4}\sum_{i=1}^{4} BEP_{burst\ i}}$$

(Formula 4)

$$MEAN\_BEP_{blcok,b} = \frac{1}{4}\sum_{i=1}^{4} BEP_{burst\ i}$$

(Formula 5)

$$CV\_BEP_{block,b} = \frac{\sqrt{\dfrac{1}{3}\sum_{k=1}^{4}\left(BEP_{burst\,k} - \dfrac{1}{4}\sum_{i=1}^{4}BEP_{burst\,i}\right)^{2}}}{\dfrac{1}{4}\sum_{i=1}^{4}BEP_{burst\,i}}$$

(Formula 6)

Next, the measurement value of the time slot pair is computed on the basis of one time slot pair, and specifically the following two manners can be adopted.

In Manner 1, symbols of the single time slot measurement value in the prior art are used, but the definitions thereof are different, and in the present invention, the symbols of the single time slot measurement value are employed to compute the measurement values of one time slot pair, where Formulae (7), (8), and (9) are adopted.

$$R_n = (1-e)\cdot R_{n-1} + e\cdot\frac{(x_{n,a} + x_{n,b})}{2},\ \ R_{-1} = 0$$

(Formula 7)

In Formula 7, n is an iteration index, and $R_n$ represents a reliability parameter of the quality parameters of the designated modulation type after an $n^{th}$ filtering.

e is a forgetting factor, having a definition the same as that of the forgetting factor in the channel quality measurement under the BTTI modulation mode in the prior art, and representing an effect of a former value (that is, the previously computed value) on the current value (the $n^{th}$ value), where e=1 indicates that the effect of the former value on the current value is the minimum, and e=0 indicates that the effect of the former value on the current value is the maximum, that is, the smaller the value of e is, the longer the effect of the former value will last; on the contrary, the greater the value of e is, the shorter the effect of the former value will last. The definition of the forgetting factor e is given in the following.

When the terminal receives BEP_PERIOD2 and a field value thereof is any other value than 15, the forgetting factor e is defined as $e_2$, which may refer to BEP_PERIOD2 in Table 1 in the following. In this case, each terminal is allowed to be individually and separately filtered.

When the terminal receives the BEP_PERIOD2 and the field value thereof is 15 (Norm), the forgetting factor e is defined as $e_1$, which may refer to BEP_PERIOD in Table 1 in the following. Here, a normal filtering is performed (non-individual). The BEP_PERIOD2 is used by a related terminal in a service area until the terminal receives a new BEP_PERIOD2 value in the same cell, or the terminal leaves the cell, or the terminal enters a packet idle mode or an MAC idle state. The BEP_PERIOD2 is sent to the single terminal on a downlink or an uplink PACCH, and the BEP_PERIOD is sent through broadcasting on a PBCCH or a BCCH (if the PBCCH does not exist).

Table 1

| Field value | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|
| BEP_PERIOD | Reserved | | | | | 25 | 20 | 15 | 12 | 10 | 7 | 5 | 4 | 3 | 2 | 1 |
| $e_1$ | - | | | | | 0.08 | 0.1 | 0.15 | 0.2 | 0.25 | 0.3 | 0.4 | 0.5 | 0.65 | 0.8 | 1 |
| BEP_PERIOD2 | Norm | 90 | 70 | 55 | 40 | 25 | 20 | 15 | 12 | 10 | 7 | 5 | 4 | 3 | 2 | 1 |
| $e_2$ | $e_1$ | 0.03 | 0.04 | 0.05 | 0.065 | 0.08 | 0.1 | 0.15 | 0.2 | 0.25 | 0.3 | 0.4 | 0.5 | 0.65 | 0.8 | 1 |

In Table 1, $X_{n,a}$ is a parameter representing whether quality parameters of a block of first 10 ms of an $n^{th}$ filtering designated to be modulated, that is, an $n^{th}$ 20 ms, exist, where, when a value of $X_{n,a}$ is 1, it indicates that the RTTI radio block of the first 10 ms of the filtering, that is, the $n^{th}$ 20 ms, is in the designated modulation mode and is intended for the terminal; otherwise, the value of $x_{n,a}$ is 0. $X_{n,b}$ is a parameter representing whether quality parameters designated to be modulated exist, where the quality parameters are of last 10 ms of the $n^{th}$ filtering, that is, the $n^{th}$ 20 ms; when a value of $X_{n,b}$ is 1, it indicates that the RTTI radio block of the last 10 ms of the filtering, that is, the $n^{th}$ 20 ms, is in the designated modulation mode and is intended for the terminal; otherwise, the value of $X_{n,b}$ is 0.

Formula 7 may be deducted in the following manner:

$$R_{n,a} = (1-e) \cdot R_{n-1} + e \cdot x_{n,a}, \quad R_{n,b} = (1-e) \cdot R_{n-1} + e \cdot x_{n,b},$$

In the above formula, $X_{n,b}$ is a reliability parameter of quality parameters after being filtered, where the quality parameters are of the first 10 ms of the $n^{th}$ filtering and designated to be modulated, that is, the $n^{th}$ 20 ms, and $X_{n,b}$ is a reliability parameter of quality parameters of the last 10 ms of the $n^{th}$ filtering designated to be modulated, that is, the $n^{th}$ 20 ms, after being filtered.

$$R_n = \frac{R_{n,a} + R_{n,b}}{2}$$

is introduced, and Formula 7 is acquired.

Thus, in the 20 ms, whether the RTTI radio blocks of the first 10 ms and the last 10 ms are intended for the terminal and are in the designated modulation mode may have the following four cases:

1) Only the RTTI radio block of the first 10 ms satisfies the conditions, $X_{n,a}=1$ and $X_{n,b}=0$.

2) Only the RTTI radio block of the last 10 ms satisfies the conditions, $X_{n,b}=0$ and $X_{n,b}=1$.

3) Both of the RTTI radio blocks of the first 10 ms and the last 10 ms satisfy the conditions, $X_{n,b}=1$ and $X_{n,b}=1$.

4) Neither of the RTTI radio blocks of the first 10 ms and the last 10 ms satisfies the conditions, $X_{n,b}=0$ and $X_{n,b}=0$.

$$\text{MEAN\_BEP\_TN}_n = (1 - e \cdot \frac{x_{n,a} + x_{n,b}}{2R_n}) \cdot \text{MEAN\_BEP\_TN}_{n-1}$$

$$+ e \cdot \frac{x_{n,a}\text{MEAN\_BEP}_{block,n,a} + x_{n,a}\text{MEAN\_BEP}_{block,n,b}}{2R_n}$$

$$\text{(Formula 8)}$$

In Formula 8, $\text{MEAN\_BEP\_TN}_n$ is an $n^{th}$ acquired value of the MEAN_BEP of the RTTI time slot pair, that is, the acquired value of the $n^{th}$ filtering, that is, the $n^{th}$ 20 ms, and $\text{MEAN\_BEP\_TN}_{n-1}$ is an $(n-1)^{th}$ acquired value; $\text{MEAN\_BEP}_{block,n,a}$ is the MEAN_BEP of the RTTI radio block of the first 10 ms of the $n^{th}$ 20 ms, and $\text{MEAN\_BEP}_{block,n,b}$ is the MEAN_BEP of the RTTI radio block of the last 10 ms of the $n^{th}$ 20 ms.

$$\text{CV\_BEP\_TN}_n = (1 - e \cdot \frac{x_{n,a} + x_{n,b}}{2R_n}) \cdot \text{CV\_BEP\_TN}_{n-1} +$$

$$e \cdot \frac{x_{n,a}\text{CV\_BEP}_{block,n,a} + x_{n,b}\text{CV\_BEP}_{block,n,b}}{2R_n}$$

$$\text{(Formula 9)}$$

In Formula 9, $\text{CV\_BEP\_TN}_n$ is an $n^{th}$ acquired value of the MEAN_BEP of the RTTI time slot pair, that is, the acquired value of the $n^{th}$ filtering, that is, the $n^{th}$ 20 ms, and $\text{CV\_BEP\_TN}_{n-1}$ is an $(n-1)^{th}$ acquired value; $\text{CV\_BEP}_{block,n,a}$ is the BEP variance of the RTTI radio block of the first 10 ms of the $n^{th}$ 20 ms, and $\text{CV\_BEP}_{bloxk,n,b}$ is the BEP variance of the RTTI radio block of the last 10 ms of the $n^{th}$ 20 ms.

In Manner 2, measurement values of a time slot pair are newly defined, that is, a MEAN_BEP of the time slot pair and a BEP variance of the time slot pair are newly defined. Only the form of Manner 2 is different from that of Manner 1 in which the original symbols of the single time slot measurement value are used, but the represented meaning is consistent, in which Formulae (10), (11), and (12) are adopted.

$$R_n = (1-e) \cdot R_{n-1} + e \cdot \frac{(x_{n,a} + x_{n,b})}{2}, \quad R_{-1} = 0 \qquad \text{(Formula 10)}$$

In Formula 10, n is an iteration index, which is increased with the downlink radio block, and $R_n$ represents a reliability of the quality parameters of the designated modulation type after being filtered.

e is a forgetting factor, having a definition the same as that of the forgetting factor in the channel quality measurement under the BTTI modulation mode in the prior art, which is specifically described in detail in the foregoing.

$X_{n,a}$ is a parameter representing whether quality parameters of a block of first 10 ms of an $n^{th}$ filtering designated to be modulated, that is, an $n^{th}$ 20 ms, exist, in which when a value of $X_{n,a}$ is 1, it indicates that the RTTI radio block of the first 10 ms of the filtering, that is, the $n^{th}$ 20 ms, is in the designated modulation mode and is intended for the terminal; otherwise, the value of $X_{n,a}$ is 0. $X_{n,b}$ is a parameter representing whether quality parameters of a block of last 10 ms of the $n^{th}$ filtering designated to be modulated, that is, the $n^{th}$ 20 ms, exist, where, when a value of $X_{n,b}$ is 1, it indicates that the RTTI radio block of the last 10 ms of the filtering, that is, the $n^{th}$ 20 ms, is in the designated modulation mode and is intended for the terminal; otherwise, the value of $X_{n,b}$ is 0.

Thus, in the 20 ms, whether the RTTI radio blocks of the first 10 ms and the last 10 ms are intended for the terminal and are in the designated modulation mode may have the following four cases:

1) Only the RTTI radio block of the first 10 ms satisfies the conditions, $X_{n,b}$ = 1 and $X_{n,b}$ =0.

2) Only the RTTI radio block of the last 10 ms satisfies the conditions, $X_{n,a}$ =0 and $X_{n,b}$ =1.

3) Both of the RTTI radio blocks of the first 10 ms and the last 10 ms satisfy the conditions, $X_{n,a}$=1 and $X_{n,b}$=1.

4) Neither of the RTTI radio blocks of the first 10 ms and the last 10 ms satisfies the conditions, $X_{n,a}$=0 and $X_{n,b}$=0.

$$\text{MEAN\_BEP\_PAIR}_n = (1 - e \cdot \frac{x_{n,a} + x_{n,b}}{2R_n}) \cdot \text{MEAN\_BEP\_PAIR}_{n-1} +$$
$$e \cdot \frac{x_{n,a}\text{MEAN\_BEP}_{block,n,a} + x_{n,a}\text{MEAN\_BEP}_{block,n,b}}{2R_n} \qquad \text{(Formula 11)}$$

In Formula 11, MEAN_BEP_PAIR$_n$ is an $n^{th}$ acquired value of the MEAN_BEP of the RTTI time slot pair, that is, the acquired value of the $n^{th}$ filtering, that is, the $n^{th}$ 20 ms, and MEAN_BEP_PAIR$_{n-1}$ is an (n-1)$^{th}$ acquired value; MEAN_BEP$_{block,n,a}$ is the MEAN_BEP of the RTTI radio block of the first 10 ms of the $n^{th}$ filtering, that is, the $n^{th}$ 20 ms, and MEAN_BEP$_{block,n,b}$ is the MEAN_BEP of the RTTI radio block of the last 10 ms of the $n^{th}$ filtering, that is, the $n^{th}$ 20 ms.

$$\text{CV\_BEP\_PAIR}_n = (1 - e \cdot \frac{x_{n,a} + x_{n,b}}{2R_n}) \cdot \text{CV\_BEP\_PAIR}_{n-1} +$$
$$e \cdot \frac{x_{n,a}\text{CV\_BEP}_{block,n,a} + x_{n,b}\text{CV\_BEP}_{block,n,b}}{2R_n} \qquad \text{(Formula 12)}$$

In Formula 12, CV_BEP_PAIR$_n$ is an $n^{th}$ acquired value of the MEAN_BEP of the RTTI time slot pair, that is, the acquired value of the $n^{th}$ filtering, that is, the $n^{th}$ 20 ms, and CV_BEP_PAIR$_{n-1}$ is an (n-1)$^{th}$ acquired value; CV_BEP$_{block,n,a}$ is the BEP variance of the RTTI radio block of the first 10 ms of the $n^{th}$ filtering, that is, the $n^{th}$ 20 ms, and CV_BEP$_{block,n,b}$ is the BEP variance of the RTTI radio block of the last 10 ms of the $n^{th}$ filtering, that is, the $n^{th}$ 20 ms.

After the time slot pair measurement values are computed, the overall channel measurement parameters are computed according to the computed time slot pair measurement values, and the method is that the computation values of the time slot pair are averaged, no matter whether the RTTI radio block is received on the channel since a measurement report is sent from the terminal of the last time. The computation is performed on the basis of one time slot pair, in which the measurement values of the time slot pair are averaged. Two manners corresponding to the two manners of computing the time slot pair measurement values are illustrated as follows.

In Manner 1, the symbols of the single time slot measurement value in the prior art are still used, but the definitions thereof are different, and in the embodiment of the present invention, when in the BTTI channel, the symbols of the single time slot measurement value still represent the measurement values of the BTTI channel of one time slot; while when in the RTTI channel, the symbols of the single time slot measurement value represent the RTTI channel measurement values of one time slot pair. Specifically, formulae in the following are adopted.

$$\text{MEAN\_BEP}_n = \frac{\sum_j R_n^{(j)} \cdot \text{MEAN\_BEP\_TN}_n^{(j)}}{\sum_j R_n^{(j)}}$$

(Formula 13)

$$\text{CV\_BEP}_n = \frac{\sum_j R_n^{(j)} \cdot \text{CV\_BEP\_TN}_n^{(j)}}{\sum_j R_n^{(j)}}$$

(Formula 14)

In the above formulae, n is an iteration index, and j is a BTTI channel number or an RTTI channel number, in which when j is the BTTI channel number, $R_n^{(j)}$ is a reliability parameter of quality parameters of a designated modulation type of the BTTI time slot corresponding to j after being filtered, $\text{MEAN\_BEP\_TN}_{n(j)}$ is an $n^{th}$ acquired value of the MEAN_ BEP of the BTTI time slot corresponding to j, and $\text{CV\_BEP\_TN}_n$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, $\text{MEAN\_BEP\_TN}_n^{(j)}$ is an $n^{th}$ acquired value of the MEAN_BEP of the RTTI time slot pair corresponding to j, and $\text{CV\_BEP\_TN}_n^{(j)}$ is an $n^{th}$ acquired value of the BEP variance of the RTTI time slot pair corresponding to j.

$\text{MEAN\_BEP}_n$ is an $n^{th}$ acquired value of the overall MEAN_BEP, and $\text{CV\_BEP}_n$ is an $n^{th}$ acquired value of the overall BEP variance.

In Manner 2, measurement values of a time slot pair are newly defined, that is, a MEAN_BEP of the time slot pair and a BEP variance of the time slot pair are newly defined, in which formulae in the following are adopted.

$$\text{MEAN\_BEP}_n = \frac{\sum_j R_n^{(j)} \cdot \text{MEAN\_BEP\_TN}_n^{(j)} + \sum_i R_n^{(i)} \cdot \text{MEAN\_BEP\_PAIR}_n^{(i)}}{\sum_j R_n^{(j)} + \sum_i R_n^{(i)}}$$

(Formula 15)

$$\text{CV\_BEP}_n = \frac{\sum_j R_n^{(j)} \cdot \text{CV\_BEP\_TN}_n^{(j)} + \sum_i R_n^{(i)} \cdot \text{CV\_BEP\_PAIR}_n^{(i)}}{\sum_j R_n^{(j)} + \sum_i R_n^{(i)}}$$

(Formula 16)

In the above formulae, n is an iteration index, j is a BTTI channel number, and i is an RTTI channel number, $\text{MEAN\_BEP}_n$ is an $n^{th}$ acquired value of the overall MEAN_BEP, $\text{MEAN\_BEP\_TN}_n (j)$ is an $n^{th}$ acquired value of the MEAN_BEP of the BTTI time slot corresponding to j, and $\text{MEAN\_BEP\_PAIR}_n^{(i)}$ is an $n^{th}$ acquired value of the MEAN_ BEP of the RTTI time slot pair corresponding to i, $R_n$ is a reliability parameter of quality parameters of a designated modulation type after being filtered, $R_n^{(j)}$ is a reliability parameter of quality parameters of a designated modulation type of the BTTI time slot corresponding to j after being filtered, and $R_n^{(i)}$ is a reliability parameter of quality parameters of a designated modulation type of the RTTI time slot pair corresponding to i after being filtered, $CV\_BEP_n$ is an $n^{th}$ acquired value of the overall BEP variance, $CV\_BEP\_TN_n^{(j)}$ is an $n^{th}$ acquired value of the BEP variance of the BTTI time slot corresponding to j, and $CV\_BEP\_PAIR_n^{(i)}$ is an $n^{th}$ acquired value of the BEP variance of the RTTI time slot pair corresponding to i.

In a second embodiment, a measurement of 10 ms filtering on the basis of one time slot pair is performed.

In this embodiment, the RTTI channel quality measurement adopts the 10 ms (that is, one RTTI radio block period) filtering, and a value of a forgetting factor is applicable to the 10 ms filtering. RTTI radio block channel quality measurement values (referred to as radio block measurement values) are computed, the RTTI radio block measurement values may include a MEAN_BEP of the RTTI radio block and a BEP variance of the RTTI radio block, and the RTTI radio block measurement values are computed according to measurement values of the four bursts forming the radio block and distributed on the two time slots. RTTI time slot pair channel quality measurement values are computed according to the RTTI radio block measurement values. Then, overall channel quality measurement parameters on all the assigned channels, for example, an overall channel MEAN_BEP and an overall channel BEP variance on all the assigned channels, are computed according to the time slot pair measurement values.

Firstly, the MEAN_BEP of the RTTI radio block, and the BEP variance of the RTTI radio block are computed.

The terminal receives one RTTI radio block on the two time slots (that is, one time slot pair) forming an RTTI PDCH pair in 10 ms, and determines whether the RTTI radio block is intended for the terminal and is in the designated modulation mode. If yes, a mean value of computation values of the four bursts forming the RTTI radio block serves as a computation value of the RTTI radio block. A formula is shown in the following.

The MEAN_BEP of the RTTI radio block is:

$$MEAN\_BEP_{block} = \frac{1}{4}\sum_{i=1}^{4} BEP_{burst\ i} \qquad \text{(Formula 17)}$$

That is, the MEAN_BEP of the RTTI radio block $MEAN\_BEP_{block}$ is the mean value of BEPs $BEP_{burst\ i}$ of the four bursts forming the RTTI radio block.

The BEP variance of the RTTI radio block is:

$$CV\_BEP_{block} = \frac{\sqrt{\frac{1}{3}\sum_{k=1}^{4}\left(BEP_{burst\ k} - \frac{1}{4}\sum_{i=1}^{4} BEP_{burst\ i}\right)^2}}{\frac{1}{4}\sum_{i=1}^{4} BEP_{burst\ i}} \qquad \text{(Formula 18)}$$

It should be noted that, the four bursts are distributed on the two time slots (that is, one time slot pair), and belong to one RTTI radio block.

Next, the time slot pair measurement values are computed on the basis of one time slot pair, in which Formulae (19), (20), and (21) are adopted.

$$R_n = (1-e) \cdot R_{n-1} + e \cdot x_n, \quad R_{-1} = 0 \qquad \text{(Formula 19)}$$

In Formula 19, n is an iteration index, and $R_n$ represents a reliability parameter of the quality parameters of the designated modulation type after an $n^{th}$ filtering.

e is a forgetting factor, and a value of e may be a function of the forgetting factor (e', which is defined in the first embodiment) under the BTTI configuration in the prior art, for example, a non-linear function, $e = 1 - \sqrt{1-e'}$ (the embodiment of the present invention is not limited to the non-linear function). Thus, when the terminal receives BEP_PERIOD2 and a field value thereof is any other value than 15, the forgetting factor e is defined as $e_2$, which may refer to BEP_PERIOD2 in Table 2 in the following. In this case, each terminal is allowed to be individually and separately filtered. When the terminal receives the BEP_PERIOD2 and the field value thereof is 15 (Norm), the forgetting factor e is defined as $e_1$, which may refer to BEP_PERIOD in Table 2 in the following. Here, a normal filtering is performed (non-individual). The BEP_PERIOD2 is used by a related terminal in a service area until the terminal receives a new BEP_PERIOD2 value in the same cell, or the terminal leaves the cell, or the terminal enters a packet idle mode or an MAC idle state.

Table 2

| Field value | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|
| BEP PERIOD | Reserved | | | | | 25 | 20 | 15 | 12 | 10 | 7 | 5 | 4 | 3 | 2 | 1 |
| $e_1$ | - | | | | | 0.04 | 0.05 | 0.08 | 0.11 | 0.13 | 0.16 | 0.225 | 0.29 | 0.41 | 0.55 | 1 |
| BEP PERIOD2 | Norm | 90 | 70 | 55 | 40 | 25 | 20 | 15 | 12 | 10 | 7 | 5 | 4 | 3 | 2 | 1 |
| $e_2$ | $e_1$ | 0.015 | 0.02 | 0.025 | 0.033 | 0.04 | 0.05 | 0.08 | 0.11 | 0.13 | 0.16 | 0.225 | 0.29 | 0.41 | 0.55 | 1 |

It should be noted that, for the expression of the non-linear function (including, but not limited to, $e = 1 - \sqrt{1 - e'}$ ) in Table 2, when mapping between the forgetting factors e, $e_1$, and $e_2$ is implemented, valid numeral digits or digits being accurate to the decimal point of specific numeral values of $e_1$ and $e_2$ in Table 2 are not limited to what is given in Table 2.

$X_n$ is a parameter representing whether quality parameters of a block of an $n^{th}$ filtering designated to be modulated exist, that is, whether the RTTI radio block is intended for the terminal and is in the designated modulation mode, in which when a value of $x_n$ is 1, it indicates that the parameters exist; while when the value of $x_n$ is 0, it indicates that the parameters do not exist.

$$\text{MEAN\_BEP\_TN}_n = (1 - e \cdot \frac{x_n}{R_n}) \cdot \text{MEAN\_BEP\_TN}_{n-1} +$$
$$e \cdot \frac{x_n}{R_n} \cdot \text{MEAN\_BEP}_{block,n} \qquad \text{(Formula 20)}$$

In Formula 20, MEAN_BEP_TN$_n$ is an $n^{th}$ acquired value of the MEAN_BEP of the RTTI time slot pair, that is, the acquired value of the $n^{th}$ filtering, that is, the $n^{th}$ 10 ms, and MEAN_BEP_TN$_{n-1}$ is an (n-1)$^{th}$ acquired value; MEAN_ BEP$_{block,n}$ is an $n^{th}$ acquired value of the MEAN_BEP of the RTTI radio block.

$$\text{CV\_BEP\_TN}_n = (1 - e \cdot \frac{x_n}{R_n}) \cdot \text{CV\_BEP\_TN}_{n-1} + e \cdot \frac{x_n}{R_n} \cdot \text{CV\_BEP}_{block,n} \qquad \text{(Formula 21)}$$

In Formula 21, CV_BEP_TN$_n$ is an $n^{th}$ acquired value of the BEP variance of the RTTI time slot pair, that is, the acquired value of the $n^{th}$ 10 ms, and CV_BEP_TN$_{n-1}$ is an (n-1)$^{th}$ acquired value; CV_BEP$_{blok,n}$ is an $n^{th}$ acquired value of the BEP variance of the RTTI radio block.

After the time slot pair measurement values are computed, the overall channel measurement parameters on all the assigned channels are computed according to the computed time slot pair measurement values, and the method is that on the basis of one time slot pair, the time slot pair measurement values are averaged. The formulae in the following are adopted.

$$\text{MEAN\_BEP}_n = \frac{\sum_j R_n^{(j)} \cdot \text{MEAN\_BEP\_TN}_n^{(j)}}{\sum_j R_n^{(j)}} \qquad \text{(Formula 22)}$$

$$\text{CV\_BEP}_n = \frac{\sum_j R_n^{(j)} \cdot \text{CV\_BEP\_TN}_n^{(j)}}{\sum_j R_n^{(j)}} \qquad \text{(Formula 23)}$$

In the above formulae, n is an iteration index, j is a channel number, MEAN_BEP$_n$ is an $n^{th}$ acquired value of the overall MEAN_BEP, MEAN_BEP_TN$_n^{(j)}$ is an $n^{th}$ acquired value of the MEAN_BEP of the time slot pair corresponding to j, and R$_n$ is a reliability parameter of the quality parameters of the designated modulation type after being filtered.

CV_BEP$_n$ is an $n^{th}$ acquired value of the overall BEP variance, and $\text{CV\_BEP\_TN}_n^{(j)}$ is an $n^{th}$ acquired value of the BEP variance of the time slot pair corresponding to j.

It should be noted that, in the embodiments, the RTTI time slot pair measurement values, the BTTI single time slot measurement values, and the overall channel quality measurement parameters are for the designated modulation type.

No matter for the first embodiment or the second embodiment, the RTTI quality measurement parameters are reported to the network side through two reporting manners.

(1) Without changing the existing single time slot measurement value report field, the measurement values of the RTTI radio block based on two time slots (that is, one time slot pair) are reported by using the single time slot measurement value report field.

For example, the MEAN_BEP value in a measurement value Gaussian-Filtered Minimum Shift Keying (GMSK) modulation mode acquired by the terminal based on the time slot pair of a time slot 0 and a time slot 1 under the RTTI configuration may be reported on a field corresponding to the time slot 0 by default, and may also be reported on a field corresponding to the time slot 1 by default, or it is unified that the measurement values of the time slot pair are reported on the field corresponding to a smaller (larger) time slot of the time slots in the time slot pair, which is as shown in the following. <GMSK_MEAN_BEP_TNO : bit (4) >; the MEAN_BEP value acquired through the RTTI radio block based on the time slot 0 and the time slot 1 under the GMSK modulation mode

It may be definitely indicated in EGPRS Timeslot Link Quality Measurements IE or EGPRS Timeslot Link Quality Measurements Type 2 IE that, in the RTTI configuration, the MEAN_BEP measured based on each time slot pair is reported in GMSK_MEAN_BEP_TNx or 8PSK_MEAN_BEP_TNx, or MODULATION_1_MEAN_BEP_TNx, or MODULATION_2_MEAN_BEP_TNx, in which TNx is the time slot of the low time slot number in each reporting time slot pair, that is, the RTTI quality measurement parameters are reported in the corresponding single time slot measurement value report field of the designated modulation mode.

(2) New time slot pair measurement value report fields are added, and the RTTI radio block measurement values based on two time slots (that is, one time slot pair) under a certain modulation mode are reported by using the new fields. One carrier has 8 time slots, that is, maximally 4 time slot pairs are configured, such that the new fields are 4 optional time slot pair measurement values.

For example, the MEAN_BEP value in the measurement value GMSK modulation mode acquired by the terminal based on the time slot pair of the time slot 0 and the time slot 1 under the RTTI configuration does not require the original field corresponding to the single time slot measurement value, and only needs to be reported in the fields corresponding to original the time slot pair measurement values, which are as shown in the following.

```
{0 | 1 {0 <GMSK_MEAN_BEP_PAIR1 : bit (4) >
       | 1 < 8PSK_MEAN_BEP_PAIR1: bit (4) >}}
{0 1 {0 <GMSK_MEAN_BEP_PAIR2: bit (4) >
       | 1 < 8PSK_MEAN_BEP_PAIR2: bit (4) >}}
{0 1 {0 <GMSK_MEAN_BEP_PAIR3: bit (4) >
       | 1 < 8PSK_MEAN_BEP_PAIR3: bit (4) >}}
{0 1 {0 <GMSK_MEAN_BEP_PAIR4: bit (4) >
       | 1 < 8PSK_MEAN_BEP_PAIR4: bit (4) >}}
```

It may be definitely indicated in EGPRS Timeslot Link Quality Measurements IE or EGPRS Timeslot Link Quality Measurements Type 2 IE that, in the RTTI configuration, the MEAN_BEP measured based on each time slot pair is reported in GMSK_MEAN_BEP_PAIRx or 8PSK_MEAN_BEP_PAIRx, or MODULATION_1_MEAN_BEP_PAIRx, or MODULATION_2 _MEAN_BEP_PAIRx, in which PAIRx is corresponding to each reporting time slot pair, that is, the RTTI quality measurement parameters are reported in the corresponding time slot pair measurement value report field of the designated modulation mode.

Similarly, in order to enable the terminal to identify the indication of the measurement mode under the RTTI configuration, two methods can be adopted.

(1) In an assignment or a reconfiguration message (for example, a packet downlink assignment message, multi-Temporary Block Flow (TBF) downlink assignment message, or packet time slot reconfiguration message), or multi-TBF time slot reconfiguration message, or packet Circuit Switch (CS) release indication message, or Packet Switch (PS) handover radio resource information field, or PS handover radio resource 2 information field, or Dual Transfer Mode (DTM, that is, a mode in which a circuit domain and a packet domain coexist) handover PS radio resource information field, or DTM handover PS radio resource 2 information field, the existing LINK_QUALITY_ MEASUREMENT_MODE and/or EGPRS2_LINK_QUALITY_MEASUREMENT_MODE field indicating the link quality measurement mode is not changed, only the definition is added to each option, and when the network performs the RTTI configuration on the terminal, the corresponding measurement mode indication indicates the measurement mode under the RTTI configuration.

The network side indicates the measurement mode through the LINK_QUALITY_MEASUREMENT_MODE field and/or the EGPRS2_LINK_QUALITY_MEASUREMENT_MODE field in the message or the field sent to the terminal. When the LINK_QUALITY_MEASUREMENT_MODE field indicates the RTTI configuration, the terminal must report the MEAN_BEP measure parameter of each time slot pair, and the LINK_QUALITY_MEASUREMENT_MODE field indicates the measurement parameter in the EGPRS Timeslot Link Quality Measurements IE or the EGPRS Timeslot Link Quality Measurements Type 2 IE.

(2) In an assignment or a reconfiguration message (for example, a packet downlink assignment message, multi-TBF downlink assignment message, or packet time slot reconfiguration message, or multi-TBF time slot reconfiguration message), or packet CS release indication message, or PS handover radio resource information field, or PS handover radio resource 2 information field, or DTM handover PS radio resource information field, or DTM handover PS radio resource 2 information field, the original field LINK_QUALITY_MEASUREMENT_MODE remains unchanged, and one field (at least 1 bit) is newly added, in which the newly added field is configured to indicate the measurement modes under different configurations, for example, the BTTI configuration or the RTTI configuration.

FIG. 4 is a schematic structural view of a terminal according to an embodiment of the present invention.

The terminal includes a burst receiving unit 401, a first computing unit 402, and a second computing unit 403, and further includes a third computing unit 404.

The burst receiving unit 401 is configured to receive bursts forming an RTTI radio block. The first computing unit 402 is configured to compute channel quality measurement parameters of the RTTI radio block according to channel quality measurement parameters of the bursts. The second computing unit 403 is configured to compute channel quality measurement parameters of a time slot pair corresponding to the RTTI radio block according to the channel quality measurement parameters of the RTTI radio block. The third computing unit 404 is configured to compute overall channel quality measurement parameters according to the channel quality measurement parameters of the RTTI time slot pair and/or channel quality measurement parameters of a BTTI time slot.

In the actual application, the first computing unit 402 computes RTTI radio block measurement values by adopting a 20 ms filtering and a corresponding forgetting factor, or computes the RTTI radio block measurement values by adopting a 10 ms filtering and a corresponding forgetting factor. The second computing unit 403 matches a forgetting factor consistent with a filter for performing filtering, when computing the channel quality measurement parameters of the time slot pair corresponding to the RTTI radio block according to the channel quality measurement parameters of the RTTI radio block, in which the channel quality measurement parameters include a MEAN_BEP and/or a BEP variance.

Accordingly, one embodiment of the second computing unit 403 includes a parameter setting module, a time slot pair MEAN_BEP computing module, and a time slot pair BEP variance computing module.

The parameter setting module is configured to set a reliability parameter $R_n$ of quality parameters of a designated modulation type after being filtered according to a formula in the following:

$$R_n = (1-e) \cdot R_{n-1} + e \cdot \frac{(x_{n,a} + x_{n,b})}{2}, \quad R_{-1} = 0$$

In the above formula, n is an iteration index, e is a forgetting factor intended for 20 ms filtering, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist.

The time slot pair MEAN_BEP computing module is configured to compute a MEAN_BEP of the time slot pair according to one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n} \qquad \text{or}$$

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a} MEAN\_BEP_{block,n,a} + x_{n,a} MEAN\_BEP_{block,n,b}}{2R_n}$$

In the above formula, n is an iteration index, $MEAN\_BEP\_TN_n$ or $MEAN\_BEP\_PAIR_n$ is an $n^{th}$ acquired value of the MEAN_BEP of the time slot pair, $MEAN\_BEP_{block,n,a}$ is a MEAN BEP of the RTTI radio block of the first 10 ms of the $n^{tn}$ 20 ms, and $MEAN\_BEP_{block,n,b}$ is a MEAN_BEP of the RTTI radio block of the last 10 ms of the $n^{th}$ 20 ms.

The time slot pair BEP variance computing module is configured to compute a BEP variance of the time slot pair according to one of formulae in the following:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a} CV\_BEP_{block,n,a} + x_{n,b} CV\_BEP_{block,n,b}}{2R_n} \qquad \text{or}$$

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a} CV\_BEP_{block,n,a} + x_{n,b} CV\_BEP_{block,n,b}}{2R_n}$$

In the above formula, n is an iteration index, $CV\_BEP\_TN_n$ or $CV\_BEP\_PAIR_n$ is an $n^{th}$ acquired value of the BEP variance of the time slot pair, $CV\_BEP_{block,n,a}$ is a BEP variance of the RTTI radio block of the first 10 ms of the $n^{th}$ 20 ms, and $CV\_BEP_{block,n,b}$ is a BEP variance of the RTTI radio block of the last 10 ms of the $n^{th}$ 20 ms.

Correspondingly, the third computing unit 404 includes an overall MEAN_BEP computing module and an overall BEP variance computing module.

The overall MEAN_BEP computing module is configured to compute an overall MEAN_BEP according to a formula in the following:

$$MEAN\_BEP_n = \frac{\sum_j R_n^{(j)} \cdot MEAN\_BEP\_TN_n^{(j)} + \sum_i R_n^{(i)} \cdot MEAN\_BEP\_PAIR_n^{(i)}}{\sum_j R_n^{(j)} + \sum_i R_n^{(i)}}$$

In the above formula, n is an iteration index during reporting, j is a BTTI channel number, i is an RTTI channel number, $MEAN\_BEP_n$ is an $n^{th}$ acquired value of the overall MEAN_BEP, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $MEAN\text{-}_n^{(j)}$ is an $n^{th}$ acquired value of the MEAN_BEP of the BTTI time slot corresponding to j, and $MEAN\_BEP\_PAIR_n^{(i)}$ is an $n^{th}$ acquired value of the MEAN_BEP of the RTTI time slot pair corresponding to i.

The overall BEP variance computing module is configured to compute an overall BEP variance according to a formula in the following:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}}$$

In the above formula, n is an iteration index during reporting, j is a BTTI channel number, i is an RTTI channel number, $CV\_BEP_n$ is an $n^{th}$ acquired value of the overall BEP variance, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $CV\_BEP\_TN_n^{(j)}$ is an $n^{th}$ acquired value of the BEP variance of the BTTI time slot corresponding to j, and $CV\_BEP\_PAIR_n^{(i)}$ is an $n^{th}$ acquired value of the BEP variance of the RTTI time slot pair corresponding to i.

Another embodiment of the second computing unit 403 includes a parameter setting module, a time slot pair MEAN_BEP computing module, and a time slot pair BEP variance computing module.

The parameter setting module is configured to set a reliability parameter $R_n$ of quality parameters of a designated modulation type after being filtered according to a formula in the following.

$$R_n = (1-e) \cdot R_{n-1} + e \cdot x_n, \quad R_{-1} = 0$$

In the above formula, n is an iteration index, e is a forgetting factor intended for 10 ms filtering, and $X_n$ is a parameter representing whether quality parameters of a block of an $n^{th}$ 10 ms designated to be modulated exist.

The time slot pair MEAN_BEP computing module is configured to compute a MEAN_BEP of the RTTI time slot pair according to a formula in the following:

$$MEAN\_BEP\_TN_n = (1 - e \cdot \frac{x_n}{R_n}) \cdot MEAN\_BEP\_TN_{n-1} + e \cdot \frac{x_n}{R_n} \cdot MEAN\_BEP_{block,n}$$

In the above formula, n is an iteration index, $MEAN\_BEP\_TN_n$ is an $n^{th}$ acquired value of the MEAN_BEP of the RTTI time slot pair, and $MEAN\_BEP_{block,n}$ is an $n^{th}$ acquired value of the MEAN_BEP of the RTTI radio block.

The time slot pair BEP variance computing module is configured to compute the BEP variance of the RTTI time slot pair according to a formula in the following:

$$CV\_BEP\_TN_n = (1 - e \cdot \frac{x_n}{R_n}) \cdot CV\_BEP\_TN_{n-1} + e \cdot \frac{x_n}{R_n} \cdot CV\_BEP_{block,n}$$

In the above formula, n is an iteration index, $CV\_BEP\_TN_n$ is an $n^{th}$ acquired value of the BEP variance of the RTTI time slot pair, and $CV\_BEP_{block,n}$ is an $n^{th}$ acquired value of the BEP variance of the RTTI radio block.

No matter which embodiment of the second computing unit is adopted, the third computing unit 404 may be implemented through the following modules, including an overall MEAN_BEP computing module and an overall BEP variance computing module.

The overall MEAN_BEP computing module is configured to compute an overall MEAN_BEP according to a formula in the following:

$$MEAN\_BEP_n = \frac{\sum_j R_n^{(j)} \cdot MEAN\_BEP\_TN_n^{(j)}}{\sum_j R_n^{(j)}}$$

In the above formula, n is an iteration index, MEAN_BEP is an $n^{th}$ acquired value of the overall MEAN_BEP, and j is a BTTI channel number or an RTTI channel number, in which when j is the BTTI channel number, $R_n^{(j)}$ is a reliability parameter of quality parameters of a designated modulation type of the BTTI time slot corresponding to j after being filtered, and $MEAN\_BEP\_TN_n^{(j)}$ is an $n^{th}$ acquired value of the MEAN_BEP of the BTTI time slot corresponding to j; while when j is the RTTI channel number, $R_n^{(j)}$ is a reliability parameter of quality parameters of a designated modulation type of the RTTI time slot pair corresponding to j after being filtered, and $MEAN\_BEP\_TN_n^{(j)}$ is an $n^{th}$ acquired value of the MEAN_BEP of the RTTI time slot pair corresponding to j.

The overall BEP variance computing module is configured to compute an overall BEP variance according to a formula in the following:

$$CV\_BEP_n = \frac{\sum_j R_n^{(j)} \cdot CV\_BEP\_TN_n^{(j)}}{\sum_j R_n^{(j)}}$$

In the above formula, n is an iteration index, $CV\_BEP_n$ is an $n^{th}$ acquired value of the overall BEP variance, and j is a BTTI channel number or an RTTI channel number, in which when j is the BTTI channel number, $R_n^{(j)}$ is a reliability parameter of quality parameters of a designated modulation type of the BTTI time slot corresponding to j after being filtered, and $CV\_BEP\_TN_n^{(j)}$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, and $CV\_BEP\_TN_n^{(j)}$ is an $n^{th}$ acquired value of the BEP variance of the RTTI time slot pair corresponding to j.

Through the terminal according to the embodiment of the present invention, the channel quality measurement under the RTTI configuration may be implemented. The specific implementation may refer to the description in the embodiment of the method according to the present invention.

In an embodiment, the present invention further provides a channel quality measuring system, which includes a network side and a terminal. The network side is configured to deliver a measurement mode indication, in which the measurement mode indication is configured to indicate channel quality measurement parameters of a time slot pair reported under an RTTI configuration. The terminal is configured to perform measurement under the RTTI configuration according to the measurement mode indication.

The network side may indicate the measurement mode of the terminal through a LINK_QUALITY_ MEASUREMENT_MODE field.

Through the system of the embodiment, the channel quality measurement under different configurations (BTTI configuration and/or RTTI configuration) may be implemented.

Through the descriptions of the preceding embodiments, those skilled in the art may understand that the present invention may be implemented by using hardware only or by using software and a necessary universal hardware platform. However, in most cases, using software and a necessary universal hardware platform are preferred. Based on such understandings, all or part of the technical solution under the present invention that makes contributions to the prior art may be essentially embodied in the form of a software product. The software product may be stored in a storage medium, which can be a magnetic disk, a Compact Disk Read-Only Memory (CD-ROM), a Read-Only Memory (ROM) or a Random Access Memory (RAM). The software product includes a number of instructions that enable a computer device (personal computer, server, or network device) to execute the methods provided in the embodiments of the present invention.

Although the invention is described through several exemplary embodiments, the invention is not limited to such embodiments as the preceding embodiments are only intended to help understand the system and method of the present invention.

**Claims**

1. A channel quality measuring method, comprising:

    receiving (301) bursts forming a Reduced Transmission Time Interval (RTTI) radio block; and
    computing (302) channel quality measurement parameters of the RTTI radio block according to channel quality measurement parameters of the bursts, and computing channel quality measurement parameters of a time slot pair corresponding to the RTTI radio block according to the channel quality measurement parameters of the RTTI radio block;
    wherein
    during the computing the channel quality measurement parameters of the time slot pair corresponding to the RTTI radio block according to the channel quality measurement parameters of the RTTI radio block, a forgetting factor consistent with a filter adopted in the computing of the channel quality measurement parameters of the time slot pair is matched for performing filtering; and
    the channel quality measurement parameters comprise a Mean Bit Error Probability (MEAN_BEP) and/or a BEP variance.

2. The method according to claim 1, further comprising:

    computing overall channel quality measurement parameters according to the channel quality measurement parameters of the RTTI time slot pair and/or channel quality measurement parameters of a Basic Transmission Time Interval (BTTI) time slot.

3. The method according to claim 2, wherein during the computing the channel quality measurement parameters of the time slot pair corresponding to the RTTI radio block according to the channel quality measurement parameters of the RTTI radio block, a reliability parameter $R_n$ of quality parameters of a designated modulation type after being filtered is set according to a formula in the following:

$$R_n = (1-e) \cdot R_{n-1} + e \cdot \frac{(x_{n,a} + x_{n,b})}{2}, \quad R_{-1} = 0$$

,

where n is an iteration index, e is a forgetting factor intended for 20 ms filtering, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist;

the MEAN_BEP of the time slot pair is computed according to any one of formulae in the following:

$$\mathrm{MEAN\_BEP\_TN}_n = (1 - e \cdot \frac{x_{n,a} + x_{n,b}}{2R_n}) \cdot \mathrm{MEAN\_BEP\_TN}_{n-1}$$

$$+ e \cdot \frac{x_{n,a}\mathrm{MEAN\_BEP}_{block,n,a} + x_{n,a}\mathrm{MEAN\_BEP}_{block,n,b}}{2R_n} \qquad \text{or}$$

$$\mathrm{MEAN\_BEP\_PAIR}_n = (1 - e \cdot \frac{x_{n,a} + x_{n,b}}{2R_n}) \cdot \mathrm{MEAN\_BEP\_PAIR}_{n-1} +$$

$$e \cdot \frac{x_{n,a}\mathrm{MEAN\_BEP}_{block,n,a} + x_{n,a}\mathrm{MEAN\_BEP}_{block,n,b}}{2R_n}$$

,

where n is an iteration index, MEAN_BEP-TN$_n$ or MEAN_BEP_PAIR$_n$ is an $n^{th}$ acquired value of the MEAN_BEP of the time slot pair, MEAN_BEP$_{block,n,a}$ is a MEAN_BEP of the RTTI radio block of first 10 ms of the $n^{th}$ 20 ms, and MEAN_BEP$_{block,n,b}$ is a MEAN_BEP of the RTTI radio block of last 10 ms of the $n^{th}$ 20 ms; and

the BEP variance of the time slot pair is computed according to any one of formulae in the following:

$$\mathrm{CV\_BEP\_TN}_n = (1 - e \cdot \frac{x_{n,a} + x_{n,b}}{2R_n}) \cdot \mathrm{CV\_BEP\_TN}_{n-1} +$$

$$e \cdot \frac{x_{n,a}\mathrm{CV\_BEP}_{block,n,a} + x_{n,b}\mathrm{CV\_BEP}_{block,n,b}}{2R_n} \qquad \text{or}$$

$$\mathrm{CV\_BEP\_PAIR}_n = (1 - e \cdot \frac{x_{n,a} + x_{n,b}}{2R_n}) \cdot \mathrm{CV\_BEP\_PAIR}_{n-1} +$$

$$e \cdot \frac{x_{n,a}\mathrm{CV\_BEP}_{block,n,a} + x_{n,b}\mathrm{CV\_BEP}_{block,n,b}}{2R_n}$$

,

where n is an iteration index, CV_BEP_TN$_n$ or CV_BEP_PAIR$_n$ is an $n^{th}$ acquired value of the BEP variance of the time slot pair, CV_BEP$_{block,n,a}$ is a BEP variance of the RTTI radio block of first 10 ms of the $n^{th}$ 20 ms, and CV_BEP$_{block,n,b}$ is a BEP variance of the RTTI radio block of last 10 ms of the $n^{th}$ 20 ms.

4. The method according to claim 3, wherein during the computing the overall channel quality measurement parameters according to the channel quality measurement parameters of the RTTI time slot pair and/or the channel quality measurement parameters of the BTTI time slot, an overall MEAN_BEP is computed according to a formula in the following:

$$MEAN\_BEP_n = \frac{\sum_j R_n^{(j)} \cdot MEAN\_BEP\_TN_n^{(j)} + \sum_i R_n^{(i)} \cdot MEAN\_BEP\_PAIR_n^{(i)}}{\sum_j R_n^{(j)} + \sum_i R_n^{(i)}}$$

,

where n is an iteration index during reporting, j is a BTTI channel number, i is an RTTI channel number, $MEAN\_BEP_n$ is an $n^{th}$ acquired value of the overall MEAN_BEP, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $MEAN\_BEP\_TN_n^{(j)}$ is an $n^{th}$ acquired value of the MEAN_BEP of the BTTI time slot corresponding to j, and $MEAN\_BEP\_PAIR_n^{(i)}$ is an $n^{th}$ acquired value of the MEAN_BEP of the RTTI time slot pair corresponding to i; and
an overall BEP variance is computed according to a formula in the following:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}}$$

,

where n is an iteration index during reporting, j is a BTTI channel number, i is an RTTI channel number, $CV\_BEP_n$ is an $n^{th}$ acquired value of the overall BEP variance, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $CV\_BEP\_TN_n^{(j)}$ is an $n^{th}$ acquired value of the BEP variance of the BTTI time slot corresponding to j, and $CV\_BEP\_PAIR_n^{(i)}$ is an $n^{th}$ acquired value of the BEP variance of the RTTI time slot pair corresponding to i.

5. The method according to claim 2, wherein during the computing the channel quality measurement parameters of the time slot pair corresponding to the RTTI radio block according to the channel quality measurement parameters of the RTTI radio block, a reliability parameter $R_n$ of quality parameters of a designated modulation type after being filtered is set according to a formula in the following:

$$R_n = (1-e) \cdot R_{n-1} + e \cdot x_n, \quad R_{-1} = 0$$

,

where n is an iteration index, e is a forgetting factor intended for 10 ms filtering, and $x_n$ is a parameter representing whether quality parameters of a block of an $n^{th}$ 10 ms designated to be modulated exist;
the MEAN_BEP of the RTTI time slot pair is computed according to a formula in the following:

$$MEAN\_BEP\_TN_n = (1 - e \cdot \frac{x_n}{R_n}) \cdot MEAN\_BEP\_TN_{n-1} + e \cdot \frac{x_n}{R_n} \cdot MEAN\_BEP_{block,n}$$,

where n is an iteration index, $MEAN\_HEP\_TN_n$ is an $n^{th}$ acquired value of the MEAN_BEP of the RTTI time slot pair, and $MEAN\_BEP_{block,n}$ is an $n^{th}$ acquired value of the MEAN_BEP of the RTTI radio block; and
the BEP variance of the RTTI time slot pair is computed according to a formula in the following:

$$CV\_BEP\_TN_n = (1 - e \cdot \frac{x_n}{R_n}) \cdot CV\_BEP\_TN_{n-1} + e \cdot \frac{x_n}{R_n} \cdot CV\_BEP_{block,n}$$

,

where n is an iteration index, $CV\_BEP\_TN_n$ is an $n^{th}$ acquired value of the BEP variance of the RTTI time slot pair, and $CV\_BEP_{block,n}$ is an $n^{th}$ acquired value of the BEP variance of the RTTI radio block.

6. The method according to claim 5, wherein the forgetting factor e intended for 10 ms filtering is a linear function of a forgetting factor e' intended for 20 ms filtering; or is a non-linear function of a forgetting factor e' intended for 20 ms filtering, and $e = 1 - \sqrt{1 - e'}$ .

7. The method according to claim 3 or 5, wherein during the computing the overall channel quality measurement parameters according to the channel quality measurement parameters of the RTTI time slot pair and/or the channel quality measurement parameters of the BTTI time slot, an overall MEAN_BEP is computed according to a formula in the following:

$$\mathrm{MEAN\_BEP}_n = \frac{\sum_j \mathrm{R}_n^{(j)} \cdot \mathrm{MEAN\_BEP\_TN}_n^{(j)}}{\sum_j \mathrm{R}_n^{(j)}},$$

where n is an iteration index, MEAN_BEP$_n$ is an n$^{th}$ acquired value of the overall MEAN_BEP, and j is a BTTI channel number or an RTTI channel number; when j is the BTTI channel number, R$_n^{(j)}$ is a reliability parameter of quality parameters of a designated modulation type of the BTTI time slot corresponding to j after being filtered, and MEAN_BEP_TN$_n^{(j)}$ is an n$^{th}$ acquired value of the MEAN_BEP of the BTTI time slot corresponding to j; while when j is the RTTI channel number, R$_n^{(j)}$ is a reliability parameter of quality parameters of a designated modulation type of the RTTI time slot pair corresponding to j after being filtered, and MEAN_BEP_TN$_{n(j)}$ is an n$^{th}$ acquired value of the MEAN_BEP of the RTTI time slot pair corresponding to j; and
an overall BEP variance is computed according to a formula in the following:

$$\mathrm{CV\_BEP}_n = \frac{\sum_j \mathrm{R}_n^{(j)} \cdot \mathrm{CV\_BEP\_TN}_n^{(j)}}{\sum_j \mathrm{R}_n^{(j)}},$$

where n is an iteration index, CV_BEP$_n$ is an n$^{th}$ acquired value of the overall BEP variance, and j is a BTTI channel number or an RTTI channel number; when j is the BTTI channel number, R$_n^{(j)}$ is a reliability parameter of quality parameters of a designated modulation type of the BTTI time slot corresponding to j after being filtered, and CV_BEP_TN$_n^{(j)}$ is an n$^{th}$ acquired value of the BEP variance of the BTTI time slot corresponding to j; while when j is the RTTI channel number, R$_n^{(j)}$ is a reliability parameter of quality parameters of a designated modulation type of the RTTI time slot pair corresponding to j after being filtered, and CV_BEP_TN $n^{(j)}$ is an n$^{th}$ acquired value of the BEP variance of the RTTI time slot pair corresponding to j.

8. The method according to any one of claims 1 to 7, wherein before the receiving the bursts forming the RTTI radio block, the method further comprises:

receiving a measurement mode indication of a network side, wherein the measurement mode indication is configured to indicate the channel quality measurement parameters of the time slot pair reported under an RTTI configuration; and
performing measurement under the RTTI configuration according to the measurement mode indication.

9. A terminal, comprising:

a burst receiving unit (401), configured to receive bursts forming a Reduced Transmission Time Interval (RTTI) radio block;
a first computing unit (402), configured to compute channel quality measurement parameters of the RTTI radio block according to channel quality measurement parameters of the bursts; and
a second computing unit (403), configured to compute channel quality measurement parameters of a time slot pair corresponding to the RTTI radio block according to the channel quality measurement parameters of the RTTI radio block and match a forgetting factor consistent with a filter adopted in the computing of the channel quality measurement parameters of the time slot pair for performing filtering.

**10.** The terminal according to claim 9, further comprising:

a third computing unit (404), configured to compute overall channel quality measurement parameters according to the channel quality measurement parameters of the RTTI time slot pair and/or channel quality measurement parameters of a Basic Transmission Time Interval (BTTI) time slot.

**11.** The terminal according to claim 9 or 10, wherein the second computing unit (403) comprises:

a parameter setting module, configured to set a reliability parameter $R_n$ of quality parameters of a designated modulation type after being filtered according to a formula in the following:

$$R_n = (1-e) \cdot R_{n-1} + e \cdot \frac{(x_{n,a} + x_{n,b})}{2}, \quad R_{-1} = 0 ,$$

where n is an iteration index, e is a forgetting factor intended for 20 ms filtering, $X_{n,a}$ is a parameter representing whether quality parameters of a block of first 10 ms of an $n^{th}$ 20 ms designated to be modulated exist, and $X_{n,b}$ is a parameter representing whether quality parameters of a block of last 10 ms of the $n^{th}$ 20 ms designated to be modulated exist;
a time slot pair Mean Bit Error Probability (MEAN_BEP) computing module, configured to compute a MEAN_BEP of the time slot pair according to any one of formulae in the following:

$$MEAN\_BEP\_TN_n = (1 - e \cdot \frac{x_{n,a} + x_{n,b}}{2R_n}) \cdot MEAN\_BEP\_TN_{n-1}$$

$$+ e \cdot \frac{x_{n,a} MEAN\_BEP_{block,n,a} + x_{n,a} MEAN\_BEP_{block,n,b}}{2R_n} \qquad \text{or}$$

$$MEAN\_BEP\_PAIR_n = (1 - e \cdot \frac{x_{n,a} + x_{n,b}}{2R_n}) \cdot MEAN\_BEP\_PAIR_{n-1} +$$

$$e \cdot \frac{x_{n,a} MEAN\_BEP_{block,n,a} + x_{n,a} MEAN\_BEP_{block,n,b}}{2R_n} ,$$

where n is an iteration index, MEAN_BEP_TN$_n$ or MEAN_BEP_PAIR$_n$ is an $n^{th}$ acquired value of the MEAN_BEP of the time slot pair, MEAN_BEP$_{block,n,a}$ is a MEAN_BEP of the RTTI radio block of first 10 ms of the $n^{th}$ 20 ms, and
MEAN_BEP$_{block,n,b}$ is a MEAN_BEP of the RTTI radio block of last 10 ms of the $n^{th}$ 20 ms; and
a time slot pair BEP variance computing module, configured to compute a BEP variance of the time slot pair according to any one of formulae in the following:

$$CV\_BEP\_TN_n = (1 - e \cdot \frac{x_{n,a} + x_{n,b}}{2R_n}) \cdot CV\_BEP\_TN_{n-1} +$$

$$e \cdot \frac{x_{n,a} CV\_BEP_{block,n,a} + x_{n,b} CV\_BEP_{block,n,b}}{2R_n} \qquad \text{or}$$

$$CV\_BEP\_PAIR_n = (1 - e \cdot \frac{x_{n,a} + x_{n,b}}{2R_n}) \cdot CV\_BEP\_PAIR_{n-1} +$$

$$e \cdot \frac{x_{n,a} CV\_BEP_{block,n,a} + x_{n,b} CV\_BEP_{block,n,b}}{2R_n}$$ ,

where n is an iteration index, $CV\_BEP\_TN_n$ or $CV\_BEP\_PAIR_n$ is an $n^{th}$ acquired value of the BEP variance of the time slot pair, $CV\_BEP_{block,n,a}$ is a BEP variance of the RTTI radio block of first 10 ms of the $n^{th}$ 20 ms, and $CV\_BEP_{block,n,b}$ is a BEP variance of the RTTI radio block of last 10 ms of the $n^{th}$ 20 ms.

**12.** The terminal according to claim 11, wherein the third computing unit comprises:

an overall MEAN_BEP computing module, configured to compute an overall MEAN_BEP according to a formula in the following:

$$MEAN\_BEP_n = \frac{\sum_j R_n^{(j)} \cdot MEAN\_BEP\_TN_n^{(j)} + \sum_i R_n^{(i)} \cdot MEAN\_BEP\_PAIR_n^{(i)}}{\sum_j R_n^{(j)} + \sum_i R_n^{(i)}}$$ ,

where n is an iteration index during reporting, j is a BTTI channel number, i is an RTTI channel number, $MEAN\_BEP_n$ is an $n^{th}$ acquired value of the overall MEAN BEP, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $MEAN\_BEP\_TN_{n(j)}$ is an $n^{th}$ acquired value of the MEAN_ BEP of the BTTI time slot corresponding to j, and $MEAN\_BEP\_PAIR_n^{(i)}$ is an $n^{th}$ acquired value of the MEAN_ BEP of the RTTI time slot pair corresponding to i; and

an overall BEP variance computing module, configured to compute an overall BEP variance according to a formula in the following:

$$CV\_BEP_n = \frac{\sum_j R_n^{(j)} \cdot CV\_BEP\_TN_n^{(j)} + \sum_i R_n^{(i)} \cdot CV\_BEP\_PAIR_n^{(i)}}{\sum_j R_n^{(j)} + \sum_i R_n^{(i)}}$$ ,

where n is an iteration index during reporting, j is a BTTI channel number, i is an RTTI channel number, $CV\_BEP_n$ is an $n^{th}$ acquired value of the overall BEP variance, $R_n^{(j)}$ is a reliability parameter of quality parameters of a designated modulation type of the BTTI time slot corresponding to j after being filtered, $R_n^{(i)}$ is a reliability parameter of quality parameters of a designated modulation type of the RTTI time slot pair corresponding to i after being filtered, $CV\_BEP\_TN_n^{(j)}$ is an $n^{th}$ acquired value of the BEP variance of the BTTI time slot corresponding to j, and $CV\_BEP\_PAIR_n^{(i)}$ is an $n^{th}$ acquired value of the BEP variance of the RTTI time slot pair corresponding to i.

**13.** The terminal according to claim 9 or 10, wherein the second computing unit comprises:

a parameter setting module, configured to set a reliability parameter $R_n$ of quality parameters of a designated modulation type after being filtered according to a formula in the following:

$$R_n = (1 - e) \cdot R_{n-1} + e \cdot x_n, \quad R_{-1} = 0$$ ,

where n is an iteration index, e is a forgetting factor intended for 10 ms filtering, and $X_n$ is a parameter representing whether quality parameters of a block of an $n^{th}$ 10 ms designated to be modulated exist;

a time slot pair MEAN_BEP computing module, configured to compute a MEAN_BEP of the RTTI time slot pair according to a formula in the following:

$$\text{MEAN\_BEP\_TN}_n = (1 - e \cdot \frac{x_n}{R_n}) \cdot \text{MEAN\_BEP\_TN}_{n-1} + e \cdot \frac{x_n}{R_n} \cdot \text{MEAN\_BEP}_{block,n},$$

where n is an iteration index, $\text{MEAN\_BEP\_TN}_n$ is an $n^{th}$ acquired value of the MEAN_BEP of the RTTI time slot pair, and $\text{MEAN\_BEP}_{block,n}$ is an $n^{th}$ acquired value of the MEAN_BEP of the RTTI radio block; and

a time slot pair BEP variance computing module, configured to compute the BEP variance of the RTTI time slot pair according to a formula in the following:

$$\text{CV\_BEP\_TN}_n = (1 - e \cdot \frac{x_n}{R_n}) \cdot \text{CV\_BEP\_TN}_{n-1} + e \cdot \frac{x_n}{R_n} \cdot \text{CV\_BEP}_{block,n}$$,

where n is an iteration index, $\text{CV\_BEP\_TN}_n$ is an $n^{th}$ acquired value of the BEP variance of the RTTI time slot pair, and $\text{CV\_BEP}_{block,n}$ is an $n^{th}$ acquired value of the BEP variance of the RTTI radio block.

14. The terminal according to claim 11 or 13, wherein the third computing unit comprises:

an overall MEAN_BEP computing module, configured to compute an overall MEAN_BEP according to a formula in the following:

$$\text{MEAN\_BEP}_n = \frac{\sum_j R_n^{(j)} \cdot \text{MEAN\_BEP\_TN}_n^{(j)}}{\sum_j R_n^{(j)}},$$

where n is an iteration index, $\text{MEAN\_BEP}_n$ is an $n^{th}$ acquired value of the overall MEAN_BEP, and j is a BTTI channel number or an RTTI channel number; when j is the BTTI channel number, $R_n^{(j)}$ is a reliability parameter of quality parameters of a designated modulation type of the BTTI time slot corresponding to j after being filtered, and $\text{MEAN\_BEP\_TN}^n$ (j) is an $n^{th}$ acquired value of the MEAN_BEP of the BTTI time slot corresponding to j; while when j is the RTTI channel number, $R_n^{(j)}$ is a reliability parameter of quality parameters of a designated modulation type of the RTTI time slot pair corresponding to j after being filtered, and $\text{MEAN\_BEP\_TN}_n^{(j)}$ is an $n^{th}$ acquired value of the MEAN_BEP of the RTTI time slot pair corresponding to j; and

an overall BEP variance computing module, configured to compute an overall BEP variance according to a formula in the following:

$$\text{CV\_BEP}_n = \frac{\sum_j R_n^{(j)} \cdot \text{CV\_BEP\_TN}_n^{(j)}}{\sum_j R_n^{(j)}},$$

where n is an iteration index, $\text{CV\_BEP}_n$ is an $n^{th}$ acquired value of the overall BEP variance, and j is a BTTI channel number or an RTTI channel number; when j is the BTTI channel number, $R_n^{(j)}$ is a reliability parameter of quality parameters of a designated modulation type of the BTTI time slot corresponding to j after being filtered, and $\text{CV\_BEP\_TN}_n^{(j)}$ is an $n^{th}$ acquired value of the BEP variance of the BTTI time slot corresponding to j; while when j is the RTTI channel number, $R_n^{(j)}$ is a reliability parameter of quality parameters of a designated modulation type of the RTTI time slot pair corresponding to j after being filtered, and $\text{CV\_BEP\_TN}_n^{(j)}$ is an $n^{th}$ acquired value of the BEP variance of the RTTI time slot pair corresponding to j.

15. A channel quality measuring system, comprising:

a network side, configured to deliver a measurement mode indication, wherein the measurement mode indication is configured to indicate channel quality measurement parameters of a time slot pair reported under a Reduced Transmission Time Interval (RTTI) configuration; and

a terminal, according to any one of claims 9-14, and configured to perform measurement under the RTTI configuration according to the measurement mode indication.

Frame  Time slot
number  number

| | | | | | | | | |
|---|---|---|---|---|---|---|---|---|
| i | 0 | 1 | 2 | 3 | 4 | 5 | 6 | 7 |
| i+1 | 0 | 1 | 2 | 3 | 4 | 5 | 6 | 7 |
| i+n | 0 | 1 | 2 | 3 | 4 | 5 | 6 | 7 |
| i+n+1 | 0 | 1 | 2 | 3 | 4 | 5 | 6 | 7 |

PDCH PDCH PDCH PDCH PDCH PDCH PDCH PDCH
   0      1      2      3      4      5      6      7

# FIG. 1

27

FIG. 2

301

Bursts forming an RTTI radio block are received.

302

Channel quality measurement parameters of the RTTI radio block are computed according to channel quality measurement parameters of the bursts.

303

Channel quality measurement parameters of a time slot pair corresponding to the RTTI radio block are computed according to the channel quality measurement parameters of the RTTI radio block.

## FIG. 3

401

Burst receiving unit

402

First computing unit

403

Second computing unit

404

Third computing unit

## FIG. 4

**EUROPEAN SEARCH REPORT**

Application Number

EP 12 18 0208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "3rd Generation Partnership Project; Technical Specification Group GSM/EDGE Radio Access Network; Radio subsystem link control (Release 7)", 3GPP STANDARD; 3GPP TS 45.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.11.0, 1 February 2008 (2008-02-01), pages 1-117, XP050379204, | 1,2, 5-10, 13-15 | INV. H04W24/08 H04L1/20 |
| Y | * The relevant pages are 34-36 and 70-77. The relevant paragraphs are 8.2.3.2, 10.2.3.2, 10.2.3.2.1, 10.2.3.2.3. * & "3rd Generation Partnership Project; Technical Specification Group GSM/EDGE Radio Access Network; Multiplexing and multiple access on the radio path (Release 7)", 3GPP STANDARD; 3GPP TS 45.002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.6.0, 1 November 2007 (2007-11-01), pages 1-105, XP050378984, * The relevant pages are 34-35 and 63. The relevant paragraph is 6.3.2.1 * ----- -/-- | 1,2, 5-10, 13-15 | TECHNICAL FIELDS SEARCHED (IPC) H04L H04W |

The present search report has been drawn up for all claims

| Place of search | Date of completion of the search | Examiner |
|---|---|---|
| Munich | 19 September 2012 | Meister, Mark |

EPO FORM 1503 03.82 (P04C01)

Europäisches
Patentamt

European
Patent Office

Office européen
des brevets

# EUROPEAN SEARCH REPORT

**Application Number**

EP 12 18 0208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 95/31879 A2 (NOKIA TELECOMMUNICATIONS OY [FI]; NOKIA MOBILE PHONES LTD [FI]; HONKAS) 23 November 1995 (1995-11-23) <br> * page 2, lines 31-33 * <br> * page 3, lines 4-20 * <br> * page 4, line 20 - page 5, line 23 * <br> * page 16, lines 1-10 * <br> * page 16, line 33 - page 17, line 1 * <br> * page 17, lines 6-14 * <br> * figures 9,10 * <br> ----- | 1,2, 5-10, 13-15 | |
| E | WO 2009/102109 A1 (LG ELECTRONICS INC [KR]; KOO HYOUN HEE [KR]) 20 August 2009 (2009-08-20) <br> * the whole document * <br> ----- | 1,2, 5-10, 13-15 | |
| E | WO 2009/064882 A2 (INTERDIGITAL PATENT HOLDINGS [US]; AGHILI BEHROUZ [US]; RUDOLF MARIAN) 22 May 2009 (2009-05-22) <br> * the whole document * <br> ----- | 1,2, 5-10, 13-15 | |
| X,P | HUAWEI TECHNOLOGIES CO LTD ET AL: "Channel quality measurement and reporting", 3GPP DRAFT; GP-081420, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 28 August 2008 (2008-08-28), XP050413839, * the whole document * <br> ----- <br> -/-- | 1-15 | TECHNICAL FIELDS SEARCHED (IPC) |

The present search report has been drawn up for all claims

| Place of search | Date of completion of the search | Examiner |
|---|---|---|
| Munich | 19 September 2012 | Meister, Mark |

**EUROPEAN SEARCH REPORT**

Application Number

EP 12 18 0208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | HUAWEI TECHNOLOGIES CO LTD: "Channel Quality Measurement in RTTI configuration", 3GPP DRAFT; GP-081342, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 28 August 2008 (2008-08-28), XP050413797, * the whole document * ----- | 1-15 | |
| X,P | HUAWEI TECHNOLOGIES CO LTD: "Channel Quality Measurement in RTTI configuration", 3GPP DRAFT; GP-081016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 20 August 2008 (2008-08-20), XP050413498, * the whole document * ----- | 1-15 | TECHNICAL FIELDS SEARCHED (IPC) |
| X,P | HUAWEI TECHNOLOGIES CO LTD: "Channel quality measurement in RTTI configuration", 3GPP DRAFT; GP-081014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 20 August 2008 (2008-08-20), XP050413496, * the whole document * ----- -/-- | 1-15 | |

The present search report has been drawn up for all claims

| Place of search | Date of completion of the search | Examiner |
|---|---|---|
| Munich | 19 September 2012 | Meister, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 18 0208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LG ELECTRONICS INC: "Channel quality reporting in RTTI configuration with the time unit of 20", 3GPP DRAFT; GP-080498 DISCUSSION PAPER ON THE CHANNEL QUALITY REPORTING IN RTTI CONFIGURATION WITH THE TIME UNIT OF 20 MS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX, vol. TSG GERAN, no. Malaga; 20080506, 6 May 2008 (2008-05-06), XP050019820, * the whole document * ----- | 1,2, 5-10, 13-15 | |
| X,P | HUAWEI TECHNOLOGIES CO LTD: "Channel quality measurement in RTTI configuration", 3GPP DRAFT; GP-080042, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seoul; 20080206, 6 February 2008 (2008-02-06), XP050019396, * the whole document * ----- | 1,2, 5-10, 13-15 | TECHNICAL FIELDS SEARCHED (IPC) |
| X,P | HUAWEI TECHNOLOGIES CO LTD: "Channel Quality Measurement in RTTI configuration", 3GPP DRAFT; GP-080044, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seoul; 20080211, 11 February 2008 (2008-02-11), XP050019398, * the whole document * ----- | 1,2, 5-10, 13-15 | |

The present search report has been drawn up for all claims

| Place of search | Date of completion of the search | Examiner |
|---|---|---|
| Munich | 19 September 2012 | Meister, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 0208

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2012

| Patent document cited in search report | | Publication date | Patent family member(s) | | Publication date |
|---|---|---|---|---|---|
| WO 9531879 | A2 | 23-11-1995 | AT | 205341 T | 15-09-2001 |
| | | | AU | 682112 B2 | 18-09-1997 |
| | | | AU | 2410495 A | 05-12-1995 |
| | | | CN | 1128604 A | 07-08-1996 |
| | | | DE | 69522527 D1 | 11-10-2001 |
| | | | DE | 69522527 T2 | 25-04-2002 |
| | | | EP | 0709015 A1 | 01-05-1996 |
| | | | FI | 942191 A | 12-11-1995 |
| | | | JP | 3831762 B2 | 11-10-2006 |
| | | | JP | H09504153 A | 22-04-1997 |
| | | | NO | 960118 A | 08-03-1996 |
| | | | US | 5898925 A | 27-04-1999 |
| | | | US | 5991627 A | 23-11-1999 |
| | | | WO | 9531879 A2 | 23-11-1995 |
| WO 2009102109 | A1 | 20-08-2009 | EP | 2191591 A1 | 02-06-2010 |
| | | | US | 2010271971 A1 | 28-10-2010 |
| | | | WO | 2009102109 A1 | 20-08-2009 |
| WO 2009064882 | A2 | 22-05-2009 | AR | 069299 A1 | 13-01-2010 |
| | | | TW | 200926639 A | 16-06-2009 |
| | | | TW | 201012096 A | 16-03-2010 |
| | | | US | 2009135773 A1 | 28-05-2009 |
| | | | WO | 2009064882 A2 | 22-05-2009 |

EPO FORM P0459

For more details about this annex : see Official Journal of the European Patent Office, No. 12/82